# EUROPEAN PATENT SPECIFICATION

(11) **EP 1 478 128 B1**
(45) Date of publication and mention of the grant of the patent: **21.06.2006**
(21) Application number: 04252034.6
(22) Date of filing: 06.04.2004
(51) Int. Cl.: H04L 12/28, H04L 12/66, H04L 12/06

(54) **Apparatus and method for connecting separate networks**
Apparat und Verfahren um separate Netzwerke zu verbinden
Appareil et procédé pour connecter des réseaux séparés

(30) Priority: 16.04.2003 KR 2003024173
(43) Date of publication of application: 17.11.2004
(73) Proprietor: SAMSUNG ELECTRONICS CO., LTD., Suwon-si, Gyeonggi-do (KR)
(72) Inventor: Kim, Do-heon, Seoul (KR); Yook, Hyun-gyoo, c/o 401 Pyeongan Villa, Seoul (KR); Yoon, Hyun-sik, 6-303 Woosung Villa, Seoul (KR)
(74) Representative: Davies, Robert Ean

(56) References cited:
- EP-A- 0 837 579
- EP-A- 1 175 043
- WO-A-97/09800
- US-A- 5 075 884
- US-A1- 2002 046 349

## Description

Apparatuses and methods according to embodiments of the present invention relate to connecting separate networks, and more particularly, to connecting separate networks, wherein devices present in the network can be mutually controlled by connecting the separate networks with one another.

Generally, a home network is constructed of a private network based on Internet protocol (IP) and controls a variety of equipment, such as all types of personal computers, intelligent products and wireless apparatus used in the home, by connecting them in one network.

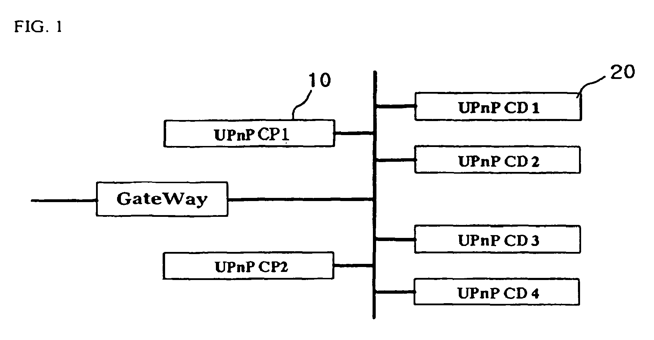

Figure 1 is a diagram schematically showing a home network of the related art. The configuration of a UPnP (Universal Plug and Play) home network is roughly divided into a UPnP controlled device 20 (hereinafter, referred to "UPnP CD") to be controlled and a UPnP control point 10 (hereinafter, referred to "UPnP CP") for controlling the UPnP CD 20.

The UPnP CD 20 may include a plurality of UPnP devices each of which realizes a specific service according to its own function, and the UPnP CP 10 controls the UPnP CD 20 by analyzing an Extended Markup Language (XML) file in which the service of a specific device is described.

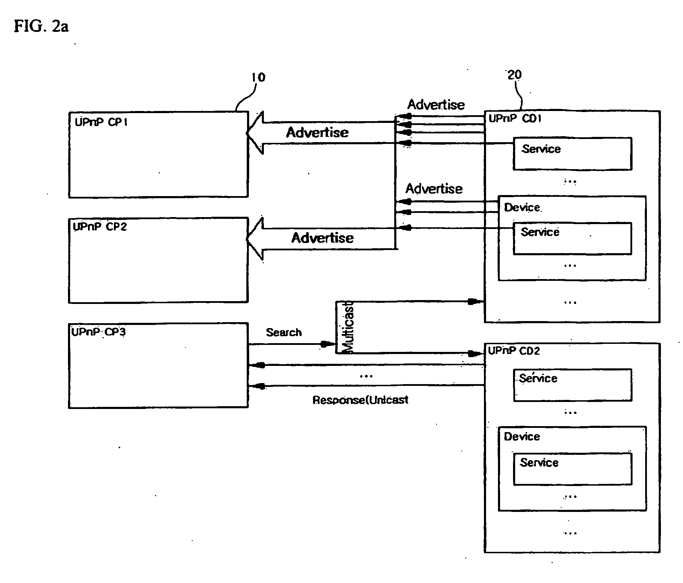

Figures 2a to 2d are diagrams showing an operation process for controlling UPnP controlled devices present in a home network of the related art. To control UPnP devices in a current UPnP home network, discovery and description processes are performed so that information on the UPnP CD 20 can be obtained. Thus, the UPnP CD 20 can be controlled through the information on the UPnP CD 20 connected to the home network, which is obtained through the foregoing processes. Here, the UPnP CP 10 searches for a device to be controlled by the UPnP CP 10 through the discovery process, analyzes what commands the UPnP CP 10 can give to a specific device by reading the service template XML of the UPnP device searched during the discovery process through the description process, and controls the UPnP device by sending a command in the form of a Simple Object Access Protocol (SOAP) message to a specific service of the UPnP device to be controlled by the UPnP CP 10 through a control process. In the meantime, the UPnP CD 20 performs an event process for transmitting changed information of its own to the UPnP CP 10.

Figure 2a shows a discovery process. The discovery process can be roughly divided into two cases for the following explanations. One is a case where a new UPnP device is added to a home network, and the other is a case where a new UPnP CP 10 is added to a home network.

First, the case where a UPnP device (e.g., UPnP CD1) is added to a network is called advertising. In such a case, the UPnP device transmits a multicast message to a UPnP CP 10 to inform the UPnP CP 10 of its presence. That is, in a state where a UPnP CP 10 is present in a network, the UPnP device is added to the network and is then assigned a unique Uniform Resource Locator (URL) of its own through an addressing process. Thereafter, the UPnP device informs all the devices or the UPnP CP 10 present in the network of its presence by transmitting a multicast message to all the devices and/or the UPnP CP 10 present in the network. The UPnP CP 10 that intends to control the UPnP device receives the message multicast from the UPnP device and registers the UPnP device.

On the other hand, in a case where a UPnP CP 10 is newly added to a home network in a state where UPnP devices are present in the network, the UPnP CP 10 transmits a multicast message, and accordingly, the UPnP device transmits a unicast message to the UPnP CP 10 that is looking for UPnP devices. That is, if the UPnP devices receive a search message multicast from the UPnP CP 10 and then transmits a unicast response message to the UPnP CP 10 looking for UPnP devices in a state where the UPnP devices have completed the addressing process and have been assigned their own URL, the UPnP CP 10 which has received the response messages registers the UPnP devices.

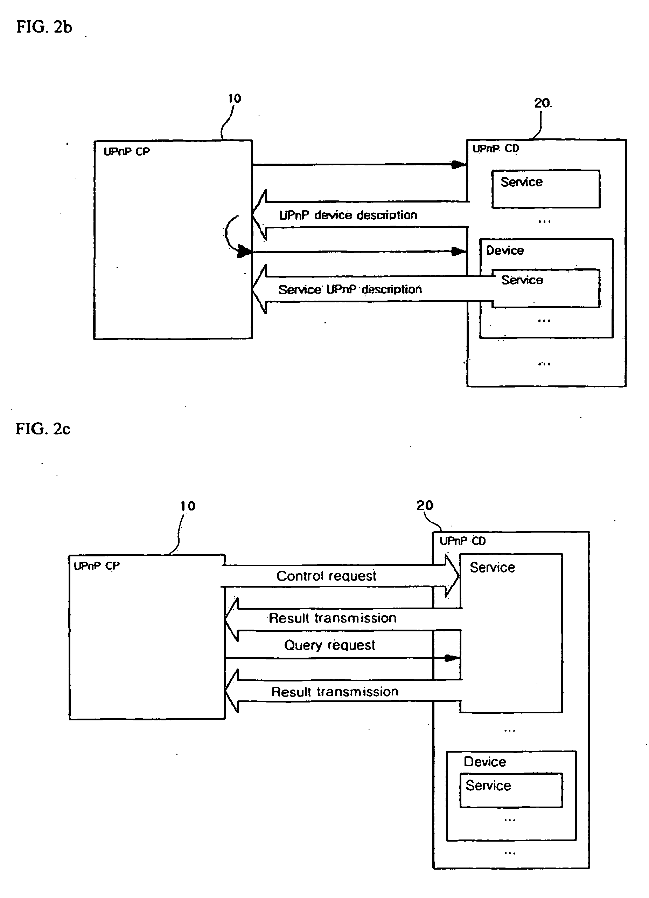

Figure 2b shows a description process. The description process means the process of obtaining service functions necessary for the UPnP CP 10 to control a UPnP device by analyzing the service description XML file provided from the UPnP device. That is, the UPnP CP 10 that intends to control a UPnP device requests the UPnP device for its description XML file, and parses the requested description XML file.

Figure 2c shows a control process. The control process means a process in which the UPnP CP 10 transmits a command in the form of a SOAP message to a specific service of the UPnP device to be controlled by the UPnP CP 10 in a state where the UPnP device and the UPnP CP 10 mutually know their own URL addresses through the addressing and discovery processes. That is, the UPnP CP 10 can directly control the UPnP device by transmitting a service template for the UPnP device to be controlled by the UPnP CP 10.

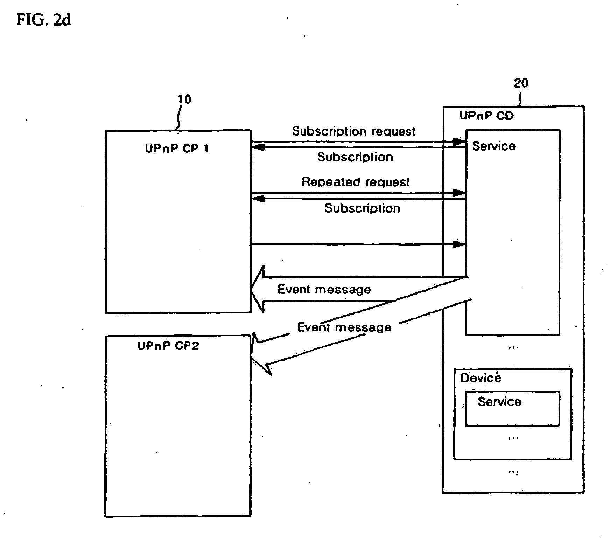

Figure 2d shows an event process. The event process means a process in which if the UPnP CP 10 requests a relevant UPnP CD 20 subscription so that the UPnP CP 10 can know about changes in the information status of the UPnP CD 20, the UPnP CD 20 transmits an event message informing the UPnP CP 10 whenever information on the UPnP device is changed.

International patent application (WO 97/09800) discloses a modular communications and applications control system incorporating a home controller for controlling access to a home network which includes a plurality of modules. The home controller is used to draw together external communications networks, such LANs and WANs, internal communication networks, such as a home network of modules, and applications which can reside on or across any of the above networks.

However, since the home network technology of the related art can be employed in the home, it has spatial limitations. That is, device connections in the home are locally constructed, and thus, the UPnP operates only on a single home network. Therefore, there is a problem in that the UPnP itself cannot allow two or more separate home networks to be flexibly connected to one another.

An aim of embodiments of the present invention is to solve or at least ameliorate the aforementioned problem. Accordingly, embodiments of the present invention aim to provide an apparatus and method for connecting separate networks, wherein devices present in the networks can be mutually controlled by connecting the separate networks with one another.

According to an aspect of the present invention, there is provided a network connection apparatus, comprising: a join module for connecting a second network, to which the join module belongs, with a first network in response to an inter-network connection request message transmitted from the first network, characterised in that the join module is operable to set a security level of the first network, and to control network command messages in response to the set security level.

According to another aspect of the present invention, there is provided a method for connecting separate networks, comprising the steps of: (a) transmitting an initial inter-network connection request message to a second network by a first network; analyzing the initial inter-network connection request message and setting a security level of the first network by the second network; (c) transmitting a network command message to the second network by the first network; (d) searching, by the second network, the set security level of the first network which has transmitted the network command message; and (e) transmitting the searched security level and the network command message to the second network.

According to another aspect of the present invention, there is provided a method for connecting separate networks, comprising the steps of: (a) receiving an initial inter-network connection request message from an external network; (b) analyzing the initial inter-network connection request message and setting a security level of the external network; (c) receiving a network command message from the external network; (d) searching the set security level of the external network which has transmitted the network command message; and (e) transmitting the searched security level and the network command message to another network to which the external network is connected.

For a better understanding of the invention, and to show how embodiments of the same may be carried into effect, reference will now be made, by way of example, to the accompanying diagrammatic drawings in which:
Figure 1 is a diagram schematically showing a home network of the related art;
Figures 2a to 2d are diagrams showing an operation process for controlling UPnP controlled devices present in a home network of the related art, wherein Figure 2a shows a discovery process, Figure 2b shows a description process, Figure 2c shows a control process, and Figure 2d shows an event process;
Figure 3 is a diagram schematically showing a configuration in which apparatuses for connecting separate networks are connected to one another according to embodiments of the present invention;
Figure 4 is a diagram showing an inner structure of the apparatus for connecting separate networks according to embodiments of the present invention;
Figure 5 is a diagram showing an inner structure of a join module in the apparatus for connecting separate networks according to embodiments the present invention;
Figures 6a to 6c are diagrams illustrating the inner operations of the join module in the apparatus for connecting separate networks according to embodiments of the present invention; and
Figures 7a and 7b are flowcharts schematically illustrating a method for connecting separate networks according to embodiments of the present invention.

An exemplary embodiment of the present invention will be described in detail with reference to the accompanying drawings.

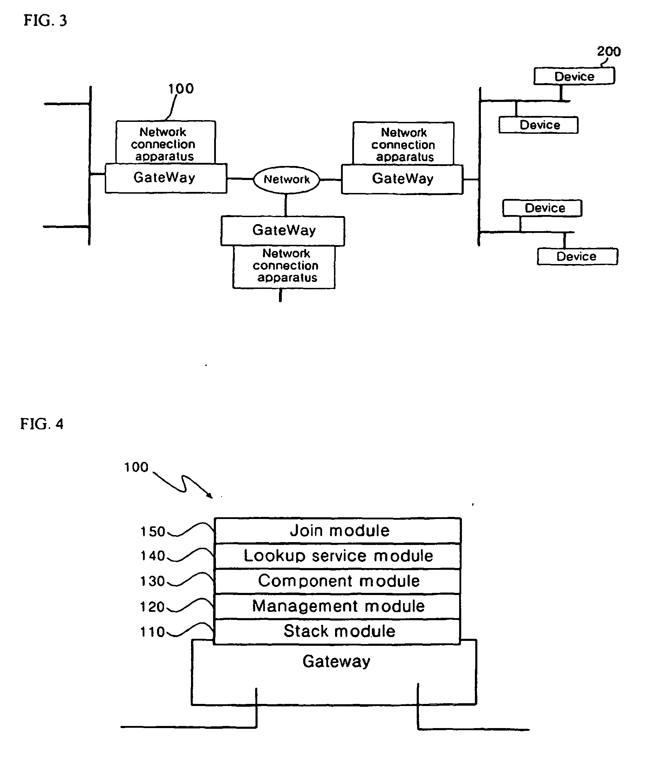

Figure 3 is a diagram schematically showing a configuration in which apparatus for connecting separate networks are connected to one another according to embodiments of the present invention, wherein each of the network connection apparatus 100 is provided within a gateway for connecting a relevant network to the outside. That is, separate networks are connected to one another through the network connection apparatus 100, and thus, devices 200 that are not present in the same network can be mutually controlled.

Figure 4 is a diagram showing an inner structure of the apparatus for connecting separate networks according to embodiments of the present invention. The network connection apparatus 100 comprises a stack module 110, a management module 120, a component module 130, a lookup service module 140, and a join module 150.

The network connection apparatus 100 manages information about the devices 200 present in a network and mutually connects the devices 200 present in each of the separate networks to one another, so that the other desired devices can be controlled even though they are not present in the same network.

The management module 120 collects and manages information about each of the devices 200 by performing a discovery process for the devices 200 present in a network. That is, the management module 120 transmits search messages to the devices 200 present in the network, searches for the devices 200 present in the network by receiving response messages from the devices 200, and requests descriptions of the searched devices to obtain information about the devices. Further, the management module 120 periodically checks the devices 200 present in the network.

The component module 130 generates a component representing services of the devices 200 present in the network on the basis of the information of the devices 200 collected by the management module 120. Here, the component includes commands and operations for the devices 200 present in the network, and service responses for the operations.

The lookup service module 140 allows information in the component generated by the component module 130 to be stored in a lookup table, and searches the component information about a specific device upon request for service of the specific device. Here, since the component information is stored in the form of the lookup table, the lookup service module 140 can easily search the component information about the relevant device.

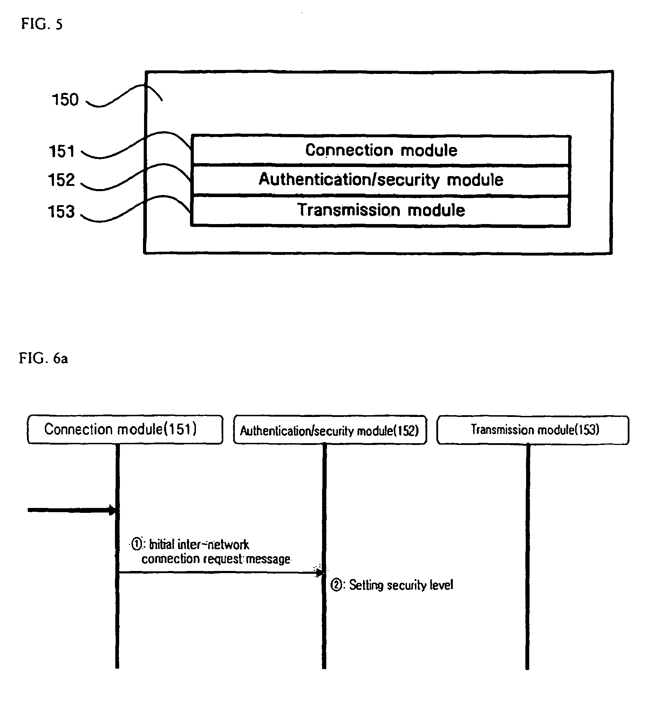

The join module 150 receives an inter-network connection request message transmitted from a first network and connects the first network to a network to which the join module belongs, sets a security level for the connected first network, and controls a network command message according to the set level. The join module will be described in more detail with reference to Figure 5.

The stack module 110 transmits a control message to the devices 200 present in the network.

Figure 5 is a diagram showing an inner structure of the join module in the apparatus for connecting separate networks according to the present invention. The join module 150 comprises a connection module 151, an authentication/security module 152, and a transmission module 153.

The connection module 151 receives the inter-network connection request message transmitted from the first network, and connects the two networks to each other. Here, the connection module 151 contains connection information (e.g., public IP address and port number) about the first network that has transmitted the inter-network connection request message and the devices present in the first network. That is, the connection module 151 manages the public IP address of a device 200 that has requested a connection or the public IP address of a gateway of a network to which the device 200 belongs, so that the connection module 151 can transmit a message through the public IP address of the relevant device 200 or the public IP address of the gateway of the network to which the device 200 belongs. Here, it can be understood that the type of message transmitted to the public IP address is a Hyper Text Transfer Protocol (HTTP) Post format.

Further, the connection module 151 checks periodically whether the first network that has transmitted the inter-network connection request message transmits a network command message every predetermined period of time. If a network command message is not received from the first network within the predetermined period of time, the connection module 151 terminates the connection of devices connected to each other. Furthermore, in order to terminate the connection, the first network that has transmitted the inter-network connection request message transmits a message for informing the termination thereof to a second network so as to cause the relevant device to be removed from the connection list of the second network and then also removes the relevant device from the connection list of the first network.

The authentication/security module 152 determines whether to allow the connection for the first network that has transmitted the inter-network connection request message to the connection module 151, and sets and checks a security level thereof. Further, the authentication/security module 152 stores and keeps information on the connection allowance for the first network that has transmitted the inter-network connection request message and on the security level thereof. Here, whether to allow the connection of the first network is performed as follows: after confirming the connection information about the first network that has transmitted an inter-network connection request message, the connection is rejected if it is confirmed that the first network is an unwanted network whereas the connection is allowed only if it is confirmed that the first network is a wanted network. In addition, the security level is applied differently depending on the first network that has transmitted the inter-network connection request message. That is, the security levels are first set to the respective devices present in a network to which the authentication/security module 151 belongs. Then, when the first network that has transmitted the inter-network connection request message is connected, it is determined on the basis of the set security levels, which device will be connected to the first network. Therefore, a high security level is set to an important device, so that only devices whose security levels are set at lower levels are shown when connected to the first network.

The transmission module 153 transmits a network command message requested by the first network for which connection is allowed by the authentication/security module 152. Here, the network command message means all messages transmitted and received between the first and second networks. For example, a discovery message, a notify message, a control message, a device information request message and the like may be included in the network message. Further, the transmission module 153 transmits information about a specific device stored in a lookup table of the cooperating lookup service module 140 at the request of the first network.

Figures 6a to 6c are diagrams illustrating the inner operations of the join module of the apparatus for connecting separate networks according to the present invention.

Figure 6a is a diagram illustrating a process of setting security levels accordingly when the first network transmits the initial inter-network connection request message to the second network. First, when the first network transmits the initial inter-network connection request message to the second network, the connection module 151 transmits the received initial inter-network connection request message to the authentication/security module 152.

Then, the authentication/security module 152 analyzes the received initial inter-network connection request message, and sets and stores the security level for the first network accordingly. Here, the security level is applied differently depending on the first network connected to the second network.

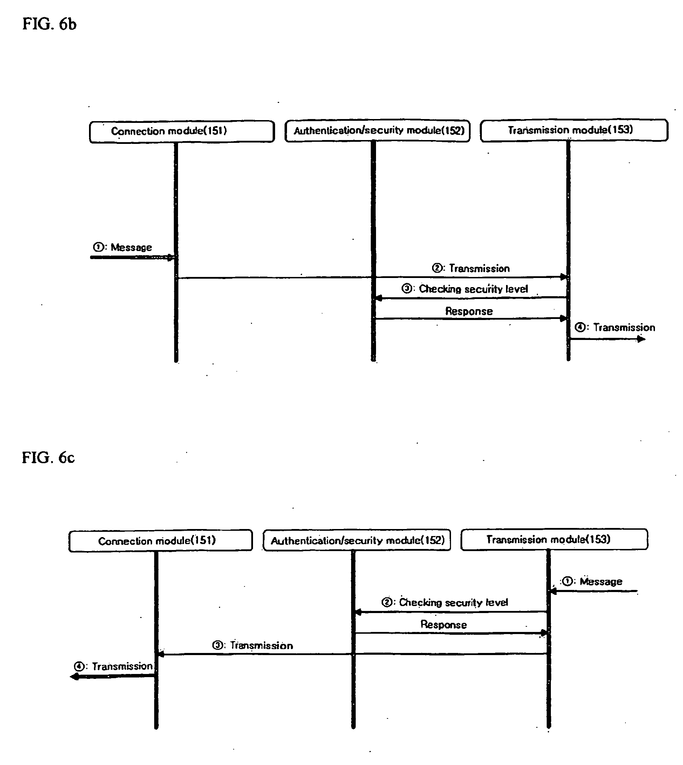

Figure 6b is a diagram showing a case where the second network receives a network command message from the first network. When a network command message is transmitted from the first network, the connection module 151 receives the network command message and transmits the received network command message to the transmission module 153. Then, the transmission module 153 causes the authentication/security module 152 to search a security level for the network command message received from the first network, and transmits both the searched security level and the network command message to the second network.

Figure 6c is a diagram showing a case where the second network transmits a response message in response to a network command message requested by the first network. First, when the second network sends a response message to be transmitted to the first network through the transmission module 153, the authentication/security module 152 checks a security level of the response message and determines whether the response message can be transmitted. If it is determined that the response message can be transmitted, the transmission module 153 transmits the response message to the connection module 151, which in turn transmits the response message to the first network.

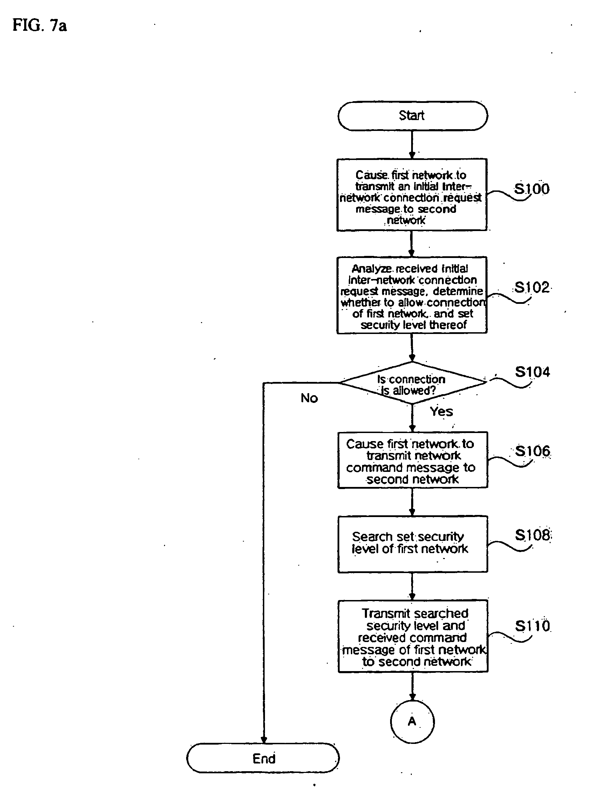

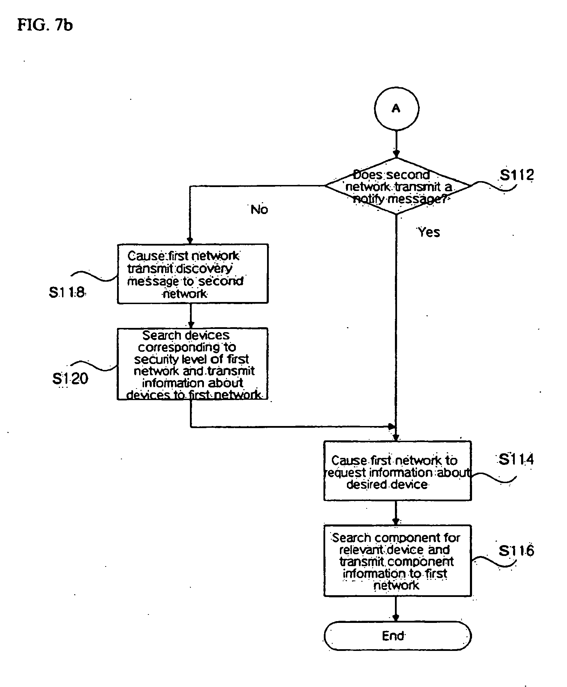

Figures 7a and 7b are flowcharts schematically illustrating a method for connecting separate networks according to an embodiment of the present invention. First, when the first network transmits an initial inter-network connection request message to the second network (S100), the connection module 151 of the second network transmits the received initial inter-network connection request message to the transmission module 153. Here, the initial inter-network connection request message includes information about the first network.

Then, the transmission module 153 transmits the received initial inter-network connection request message to the authentication/security module 152 so as to determine whether to allow the connection of the first network and to set a security level thereof (S102). Here, the security level is set differently depending on the connected first network, and the set security level is stored in the authentication/security module 152 according to the networks.

Thereafter, if the connection is allowed for the first network, the first network transmits a network command message to the second network and the authentication/security module 152 of the second network searches for the set security level of the first network (S104 to S108).

And then, the transmission module 153 transmits the searched security level and network command message of the first network to the second network (S110). At this time, if the second network transmits a response message for the network command message received from the first network, the authentication/security module 152 checks the security level for the response message to be transmitted and determines whether the response message suitable for the security level is transmitted. Here, the reason that the response message is suitable for the security level is to confirm whether information about a device whose security level is higher than the set security level, which should not be transmitted to the first network, is transmitted.

When the security level and network command message of the first network are transmitted to the second network, the second network transmits a notify message to the first network so as to inform the first network what devices are connected to the second network (S112). At this time, the second network selects only the devices corresponding to the security level of the first network and transmits information on the selected devices to the first network.

In the meantime, in a case where the network command message transmitted from the first network is a search message for looking for a specific device within the second network, the second network searches the devices corresponding to the searched security level of the first network and transmits information on the searched devices to the first network (S118, S120). Further, in a case where the network command message transmitted from the first network is a message for requesting information about a specific device within the second network, the second network searches a component of the specific device stored in the lookup service module 140 and transmits information on the searched component to the first network.

Then, when the first network requests the second network for device information about a desired device, the second network searches a component for the relevant device and transmits information on the searched component to the first network (S114, S116). Therefore, the first network can control the device connected to the second network. That is, even though the devices present in the first and second networks are not present in the same network, each of the first and second networks can control a desired device present in the other network.

In the meantime, when the first network sends the second network a connection termination request message for a currently connected device thereof, the second network deletes the relevant device of the first network currently connected to the second network from a connection list and the first network also deletes the relevant device of the second network currently connected to the first network from a connection list. Furthermore, if a network command message is not received from the first network for a predetermined period of time, the second network automatically terminates a connection with the first network.

An example of the present invention will be now explained. One's friend wishes to hear at his/her home a song stored in a compact disk (CD) player located in one's home. Here, the CD player is a UPnP device having a UPnP AV MediaServer function and is registered in the network connection apparatus 100 in the gateway connected to the outside.

First, one informs the friend of the public IP address of one's gateway and the number of a port connected to the network connection apparatus 100 so that he/she can transmit an inter-network connection request to one's network. Here, if one's gateway has its own web server, the friend can request the connection with one's network by receiving one's web address, accessing one's web page, and clicking the connection request button.

Then, when the friend transmits the inter-network connection request message to one's network, the inter-network connection request message is delivered through the connection module 151 and is shown through a monitor connected to the gateway or the network connection apparatus 100.

It is confirmed whether the friend has sent the transmitted inter-network connection request message. Then, the connection of the friend's network is allowed and the security level of the friend's network is set. For example, if the security level of the friend's network is set to "2", the friend can access only those devices corresponding to security level "2" or lower among all the devices present in one's network when connecting with one's network. That is, the current security level of the CD player is set to "2" and the devices whose levels are set to "2" or "1" are accessible to the friend. If there are any devices intended not to be accessible to the friend, their security levels should be set to be greater than "2". Thus, these devices cannot be connected to the friend's network. In the meantime, information about the devices whose connection with the friend's network is allowed and whose security level is set to "2" is stored in the authentication/security module 152.

After the friend is connected, the transmission module 153 transmits a notify message for the devices whose security levels are equal to or less than "2" to the friend's network through the connection module 151.

Then, the friend's network analyzes the received notify message and requests desired device information (service information about the CD player in this case). Thus, the friend can search for the CD player located in the living room of one's home and can hear a desired piece of music through a CD player having an UPnP MediaRenderer function located in his/her home.

In the meantime, when the friend requests a connection termination after hearing the predetermined CD, a connection termination request message is transmitted to one's network through the connection module 151. At this time, one can ask the friend whether he/she has finished hearing the CD so as to perform the connection termination. That is, if a connection termination is requested, the connection module 151 transmits a termination request message to the transmission module 153 and deletes connection information of a relevant device from the connection list of one's network. Further, the authentication/security module 152 is requested to delete the information about the relevant device or to no longer manage the information. The transmission module 153 prevents messages of the network from being transmitted outside through the connection module 151.

According to embodiments of the present invention so constructed, there is an advantage in that mutual connection and control between devices present in separate networks can be made by connecting the separate networks with one another.

Further, there is another advantage in that connection with an unwanted network can be avoided, since a user can freely determine whether to allow a requesting network for the connection and set a security level thereof.

Although the present invention has been described in connection with the exemplary embodiments thereof, it will be apparent to those skilled in the art that various changes and modifications can be made thereto.

## Claims

1. A network connection apparatus (100), comprising:
a join module (150) for connecting a second network, to which the join module belongs, with a first network in response to an inter-network connection request message transmitted from the first network, **characterised in that** the join module is operable to set a security level of the first network, and to control network command messages in response to the set security level.

2. The apparatus as claimed in claim 1, wherein the join module (150) comprises:
a connection module (151) for receiving the inter-network connection request message transmitted from the first network and connecting the first network with the second network;
an authentication/security module (152) for determining whether to allow a connection of the first network that has transmitted the inter-network connection request message to the connection module, and setting and checking the security level of the first network; and
a transmission module (153) for transmitting a requested network command message requested by the first network when the connection is allowed by the authentication/security module.

3. The apparatus as claimed in claim 1 or 2, further comprising:
a management module (120) for collecting and managing information about devices present in the second network by performing a discovery process for the devices; and
a component module (130) for generating a component, which includes commands and operations for the devices and service responses for the operations representing services of the devices present in the second network on a basis of the information about the devices collected by the management module.

4. The apparatus as claimed in claim 3, further comprising:
a stack module (110) for transmitting a control message to the devices present in the second network; and
a lookup service module (140) for storing information about the component generated by the component module in a lookup table, and searching for component information of a specific device upon a request for a service of the specific device.

5. The apparatus as claimed in any of claims 2-4, wherein the connection module (151) contains connection information about the first network or the devices present in the first network.

6. The apparatus as claimed in any of claims 2-5, wherein the connection module (151) is operable to check periodically whether the first network transmits a transmitted network command message every predetermined period of time, and to terminate the connection if the transmitted network command message is not received within the predetermined period of time.

7. The apparatus as claimed in any of claims 2-6, wherein the security level is applied differently depending on the first network to be connected.

8. The apparatus as claimed in any of claims 2-7, wherein the transmission module (153) is operable to transmit the network command messages transmitted and received between the first network and the second network to which the join module belongs.

9. A method for connecting separate networks, comprising the steps of:
(a) transmitting (S100) an initial inter-network connection request message to a second network by a first network;
(b) analyzing (S102) the initial inter-network connection request message and setting a security level of the first network by the second network;
(c) transmitting (S106) a network command message to the second network by the first network;
(d) searching, (S108) by the second network, the set security level of the first network which has transmitted the network command message; and
(e) transmitting (S110) the searched security level and the network command message to the second network.

10. The method as claimed in claim 9, wherein the initial inter-network connection request message includes information about the first network that has transmitted the initial inter-network connection request message.

11. The method as claimed in claim 9 or 10, wherein the security level is applied differently depending on the first network to be connected.

12. The method as claimed in any of claims 9-11, wherein step (b) comprises analyzing the initial inter-network connection request message and determining (S104) whether to allow a connection between the first and the second networks.

13. The method as claimed in any of claims 9-13, wherein step (e) comprises transmitting (S118) a notify message to the first network.

14. The method as claimed in any of claims 9-13, further comprising the steps of:
transmitting a response message for the network command message by the second network; and
checking a security level for the response message of the second network.

15. The method as claimed in any of claims 9-14, further comprising, if the network command message is a search message for looking for a device present in the second network, searching (S120) for devices corresponding to the searched security level of the first network and transmitting information about the devices.

16. The method as claimed in any of claims 9-15, further comprising, if the network command message is a message for requesting information about a specific device present in the second network, searching (S116) component information about the specific device among component information about the devices present in the second network and transmitting the component information about the specific device.

17. The method according to any of claims 9-16, further comprising, if the network command message is not received from the first network within a predetermined period of time, terminating a connection between the first and the second networks.

## Patentansprüche

1. Netzwerk-Verbindungsvorrichtung (100), die umfasst:
- ein Zusammenschaltungsmodul (150) zum Verbinden eines zweiten Netzwerks, zu dem das Zusammenschaltungsmodul gehört, mit einem ersten Netzwerk in Reaktion auf eine Meldung zur Verbindungsanfrage eines Zwischennetzwerks, die vom ersten Netzwerk übertragen wird,
**dadurch gekennzeichnet, dass**
das Zusammenschaltungsmodul so betrieben werden kann, dass es eine Sicherheitsstufe des ersten Netzwerks einstellt und Netzwerk-Befehlsmeldungen in Reaktion auf die eingestellte Sicherheitsstufe steuert.

2. Vorrichtung nach Anspruch 1, wobei das Zusammenschaltungsmodul (150) umfasst:
- ein Verbindungsmodul (151) zum Empfangen der Meldung zur Verbindungsanfrage eines Zwischennetzwerks vom ersten Netzwerk und zum Verbinden des ersten Netzwerks mit den zweiten Netzwerk;
- ein Berechtigungs-/Sicherheitsmodul (152), um zu bestimmen, ob eine Verbindung des ersten Netzwerks, das die Meldung zur Verbindungsanfrage des Zwischennetzwerks zum Verbindungsmodul übertragen hat, zugelassen wird, und um die Sicherheitsstufe des ersten Netzwerks einzustellen und zu prüfen; und
- ein Übertragungsmodul (153) zum Übertragen einer angeforderten Netzwerk-Befehlsmeldung, die durch das erste Netzwerk angefordert wird, wenn die Verbindung durch das Berechtigungs-/Sicherheitsmodul zugelassen wird.

3. Vorrichtung nach Anspruch 1 oder 2, die des Weiteren umfasst:
- ein Verwaltungsmodul (120), um Informationen über Anlagen zu sammeln und zu verwalten, die im zweiten Netzwerk vorhanden sind, indem ein Entdeckungsverfahren für die Anlagen durchgeführt wird; und
- ein Komponentenmodul (130), um auf der Basis der Informationen über die Anlagen, die durch das Verwaltungsmodul gesammelt wurden, eine Komponente zu erzeugen, die Befehle und Vorgänge für die Anlagen und Dienst- bzw. Servicereaktionen für die Vorgänge enthält, die die Dienste der im zweiten Netzwerk vorhandenen Anlagen repräsentieren.

4. Vorrichtung nach Anspruch 3, die des Weiteren umfasst:
- ein Datenstapelmodul (110) zum Übertragen einer Steuermeldung zu den im zweiten Netzwerk vorhandenen Anlagen; und
- ein Nachschlage-Dienstmodul (140) zum Speichern von Informationen über die durch das Komponentenmodul erzeugte Komponente in einer Nachschlagetabelle und zum Suchen nach Komponenteninformationen einer speziellen Anlage auf Anfrage nach einem Dienst bzw. Service der speziellen Anlage.

5. Vorrichtung nach einem der Ansprüche 2 - 4, wobei das Verbindungsmodul (151) Verbindungsinformationen über das erste Netzwerk oder die in dem ersten Netzwerk vorhandenen Anlagen enthält.

6. Vorrichtung nach einem der Ansprüche 2 - 5, wobei das Verbindungsmodul so betrieben werden kann, dass es periodisch überprüft, ob das erste Netzwerk eine übertragene Netzwerk-Befehlsmeldung in jedem vorgegebenen Zeitraum überträgt, und die Verbindung beendet, wenn die übertragene Netzwerk-Befehlsmeldung nicht in dem vorgegebenen Zeitraum empfangen wird.

7. Vorrichtung nach einem der Ansprüche 2 - 6, wobei die Sicherheitsstufe abhängig vom zu verbindenden ersten Netzwerk unterschiedlich angewendet wird.

8. Vorrichtung nach einem der Ansprüche 2 - 7, wobei das Übertragungsmodul (153) so betrieben werden kann, dass es die Netzwerk-Befehlsmeldungen überträgt, die zwischen dem ersten Netzwerk und dem zweiten Netzwerk, zu dem das Zusammenschaltungsmodul gehört, übertragen und empfangen werden.

9. Verfahren zum Verbinden separater Netzwerke mit den Schritten:
(a) Übertragen (S 100) einer Erstmeldung zur Verbindungsanfrage eines Zwischennetzwerks an ein zweites Netzwerk durch ein erstes Netzwerk;
(b) Analysieren (S 102) der Erstmeldung zur Verbindungsanfrage des Zwischennetzwerks und Einstellen einer Sicherheitsstufe des ersten Netzwerks durch das zweite Netzwerk;
(c) Übertragen (S 106) einer Netzwerk-Befehlsmeldung an das zweite Netzwerk durch das erste Netzwerk;
(d) Suchen (S 108) durch das zweite Netzwerk nach der eingestellten Sicherheitsstufe des ersten Netzwerks, das die Netzwerk-Befehlsmeldung übertragen hat; und
(e) Übertragen (S 110) der gesuchten Sicherheitsstufe und der Netzwerk-Befehlsmeldung an das zweite Netzwerk.

10. Verfahren nach Anspruch 9, wobei die Erstmeldung zur Verbindungsanfrage des Zwischennetzwerks Informationen über das erste Netzwerk enthält, das die Erstmeldung zur Verbindungsanfrage des Zwischennetzwerks übertragen hat.

11. Verfahren nach Anspruch 9 oder 10, wobei die Sicherheitsstufe abhängig vom zu verbindenden ersten Netzwerk unterschiedlich angewendet wird.

12. Verfahren nach einem der Ansprüche 9 - 11, wobei der Schritt (b) das Analysieren der Erstmeldung zur Verbindungsanfrage des Zwischennetzwerks und das Bestimmen (S 104) umfasst, ob eine Verbindung zwischen dem ersten und dem zweiten Netzwerk zugelassen wird.

13. Verfahren nach einem der Ansprüche 9 - 12, wobei der Schritt (e) das Übertragen (S 118) einer Benachrichtigungsmeldung zum ersten Netzwerk umfasst.

14. Verfahren nach einem der Ansprüche 9 - 13, des Weiteren mit den Schritten;
- Übertragen einer Reaktionsmeldung für die Netzwerk-Befehlsmeldung durch das zweite Netzwerk; und
- Prüfen einer Sicherheitsstufe für die Reaktionsmeldung des zweiten Netzwerks.

15. Verfahren nach einem der Ansprüche 9 - 14, das das Weiteren, wenn die Netzwerk-Befehlsmeldung eine Suchmeldung zum Suchen nach einer im zweiten Netzwerk vorhandenen Anlage ist, das Suchen (S 120) nach Anlagen, die der gesuchten Sicherheitsstufe des ersten Netzwerks entsprechen, und das Übertragen von Informationen über die Anlagen umfasst.

16. Verfahren nach einem der Ansprüche 9 - 15, das des Weiteren, wenn die Netzwerk-Befehlsmeldung eine Meldung zur Anforderung von Informationen über eine spezielle, im zweiten Netzwerk vorhandene Anlage ist, das Suchen (S 116) von Komponenteninformationen über die spezielle Anlage unter den Komponenteninformationen über die im zweiten Netzwerk vorhandenen Anlagen und das Übertragen der Komponenteninformationen über die spezielle Anlage umfasst.

17. Verfahren nach einem der Ansprüche 9 - 16, das des Weiteren, wenn die Netzwerk-Befehlsmeldung vom ersten Netzwerk nicht in einem vorgegebenen Zeitraum empfangen wird, die Beendigung einer Verbindung zwischen dem ersten und dem zweiten Netzwerk umfasst.

## Revendications

1. Dispositif de connexion de réseau (100) comprenant :
un module de jonction (150) pour connecter un second réseau, auquel le module de jonction appartient, avec un premier réseau en réponse à un message de demande de connexion inter-réseau transmis depuis le premier réseau, **caractérisé en ce que** le module de jonction peut fonctionner pour définir un niveau de sécurité du premier réseau et pour contrôler des messages de commande de réseau en réponse au niveau de sécurité fixé.

2. Dispositif selon la revendication 1, dans lequel le module de jonction (150) comprend :
un module de connexion (151) pour recevoir le message de demande de connexion inter-réseau transmis depuis le premier réseau et connectant le premier réseau avec le second réseau ;
un module d'authentification/sécurité (152) pour déterminer si l'on doit permettre une connexion du premier réseau qui a transmis le message de demande de connexion inter-réseau au module de connexion, et pour définir et vérifier le niveau de sécurité du premier réseau ; et
un module de transmission (153) pour transmettre un message de commande de réseau demandé requis par le premier réseau lorsque la connexion est autorisée par le module d'authentification/sécurité.

3. Dispositif selon la revendication 1 ou la revendication 2, comprenant en outre :
un module de gestion (120) pour collecter et gérer des informations sur les dispositifs présents dans le second réseau en exécutant un processus de découverte pour les dispositifs ; et
un module de composant (130) pour générer un composant, lequel comprend des commandes et des opérations pour les dispositifs et des réponses au service pour les opérations représentant des services des dispositifs présents dans le second réseau sur la base des informations concernant les dispositifs collectés par le module de gestion.

4. Dispositif selon la revendication 3, comprenant en outre :
un module de superposition (110) pour transmettre un message de contrôle aux dispositifs présents dans le second réseau ; et
un module de service de consultation (140) pour stocker des informations sur le composant généré par le module de composant dans une table de consultation, et pour rechercher des informations de composant d'un dispositif spécifique sur une demande pour un service du dispositif spécifique.

5. Dispositif selon l'une quelconque des revendications 2 à 4, dans lequel le module de connexion (151) contient des informations de connexion relatives au premier réseau ou aux dispositifs présents dans le premier réseau.

6. Dispositif selon l'une quelconque des revendications 2 à 5, dans lequel le module de connexion (151) peut fonctionner pour vérifier périodiquement si le premier réseau transmet un message de commande de réseau transmis durant chaque période de temps prédéterminée, et pour interrompre la connexion si le message de commande de réseau transmis n'est pas reçu pendant la période de temps prédéterminée.

7. Dispositif selon l'une quelconque des revendications 2 à 6, dans lequel le niveau de sécurité est appliqué de manière différente selon le premier réseau à être connecté.

8. Dispositif selon l'une quelconque des revendications 2 à 7, dans lequel le module de transmission (153) peut être utilisé pour transmettre les messages de commande de réseau transmis et reçus entre le premier réseau et le second réseau auquel le module de jonction appartient.

9. Procédé pour connecter des réseaux séparés, comprenant les étapes consistant à :
(a) transmettre (S100) un message de demande de connexion inter-réseau initial à un second réseau, par un premier réseau ;
(b) analyser (S102) le message de demande de connexion inter-réseau initial et définir un niveau de sécurité du premier réseau par le second réseau ;
(c) transmettre (S106) un message de commande de réseau au second réseau par le premier réseau ;
(d) rechercher (S108), par le second réseau, le niveau de sécurité défini du premier réseau, qui a transmis le message de commande de réseau ; et
(e) transmettre (S110) le niveau de sécurité recherché et le message de commande de réseau au second réseau.

10. Procédé selon la revendication 9, dans lequel le message de demande de connexion inter-réseau initial comprend des informations sur le premier réseau qui a transmis le message de demande de connexion inter-réseau initial.

11. Procédé selon la revendication 9 ou la revendication 10, dans lequel le niveau de sécurité est appliqué de manière différente selon le premier réseau à être connecté.

12. Procédé selon l'une quelconque des revendications 9 à 11, dans lequel l'étape (b) comprend d'analyser le message de demande de connexion inter-réseau initial et de déterminer (S104) si une connexion entre le premier et le second réseaux doit être autorisée.

13. Procédé selon l'une quelconque des revendications 9 à 13, dans lequel l'étape (e) comprend de transmettre (S118) un message de notification au premier réseau.

14. Procédé selon l'une quelconque des revendications 9 à 13, comprenant en outre les étapes consistant à :
transmettre un message de réponse pour le message de commande de réseau par le second réseau ; et
vérifier un niveau de sécurité pour le message de réponse du second réseau.

15. Procédé selon l'une quelconque des revendications 9 à 14, comprenant en outre, si le message de commande de réseau est un message de recherche pour rechercher un dispositif présent dans le second réseau, de rechercher (S120) des dispositifs correspondant au niveau de sécurité recherché du premier réseau et de transmettre des informations concernant les dispositifs.

16. Procédé selon l'une quelconque des revendications 9 à 15, comprenant en outre, si le message de commande de réseau est un message pour demander des informations concernant un dispositif spécifique présent dans le second réseau, de rechercher (S116) des informations de composant sur le dispositif spécifique parmi les informations de composant sur les dispositifs présents dans le second réseau, et de transmettre les informations de composant relatives au dispositif spécifique.

17. Procédé selon l'une quelconque des revendications 9 à 16, comprenant en outre, si le message de commande de réseau n'est pas reçu depuis le premier réseau dans une période de temps prédéterminée, d'interrompre une connexion entre le premier et le second réseaux.
